# EUROPÄISCHE PATENTANMELDUNG

(11) **EP 4 450 945 A1**
(43) Veröffentlichungstag der Anmeldung: **23.10.2024**
(21) Anmeldenummer: 23168826.8
(22) Anmeldetag: 19.04.2023
(51) Int. Cl.: G01M 11/08

(54) **VERBINDUNGSELEMENT ZUR VERBINDUNG VON RÄUMLICH DEZENTRAL ANGEORDNETEN, ELEKTRISCHEN KOMPONENTEN EINER MASCHINE**

(71) Anmelder: Murrelektronik GmbH, 71570 Oppenweiler (DE)
(72) Erfinder: PFESTORF, Sebastian, 76137 Karlsruhe (DE); ZELLER, Paul, 74223 Flein (DE); VIETHEN, Ulrich, 84184 Tiefenbach (DE)
(74) Vertreter: Goebel, Sebastian

(57) **Zusammenfassung**

Die Erfindung betrifft ein Verbindungselement (10) zur Verbindung von räumlich dezentral angeordneten, elektrischen Komponenten (20) einer Maschine (30), insbesondere einer Anlage. Das Verbindungselement (10) weist wenigstens eine Übertragungsleitung (11) zur Übertragung von Energie und/oder Daten und/oder Signalen zwischen den elektrischen Komponenten (20) auf, um durch die Übertragung einen Betrieb der Maschine (30) zu ermöglichen. Das Verbindungselement (10) umfasst eine Sensorik (12), die in das Verbindungselement (10) integriert ist, um eine sensorgestützte Überwachung des Verbindungselements (10) und/oder der Maschine (30) bereitzustellen. Ferner betrifft die Erfindung ein System und Verfahren.

## Beschreibung

Die vorliegende Erfindung betrifft ein Verbindungselement gemäß der im Oberbegriff des Anspruchs 1 näher definierten Art. Ferner bezieht sich die Erfindung auf ein System sowie ein Verfahren.

### Stand der Technik

Aus dem Stand der Technik sind bereits verschiedenste Maschinen, wie beispielsweise Automatisierungs-, Produktions- oder Fertigungsanlagen bekannt. Diese weisen jeweils eine Vielzahl elektrischer Komponenten auf, wobei die Komponenten wiederum über verschiedenartig ausgebildete Kabelverbindungen miteinander verbunden sind. An den Kabelverbindungen kann es nun durch mechanische oder elektrische Einflüsse zu Störungen und Beschädigungen kommen. Insbesondere bei Energieführungsketten, sogenannten Schleppketten, treten regelmäßig mechanische Belastungen an den Kabelverbindungen oder Steckverbindern auf.

Nachteilhaft bei den bekannten Lösungen ist, dass diese Störungen und Beschädigungen oftmals erst durch Fehlfunktionen der Maschine erkannt werden oder dass zusätzliche, externe Messvorrichtungen notwendig sind, um eine entsprechende Überwachung der Kabelverbindungen und/oder der Komponenten bereitzustellen.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte Überwachung einer Maschine und von Verbindungen zwischen Komponenten der Maschine bereitzustellen. Es ist eine weitere Aufgabe der vorliegenden Erfindung, eine Reduzierung und Minimierung von zusätzlichen Messvorrichtungen zu erreichen.

### Offenbarung der Erfindung

Gegenstand der Erfindung ist ein Verbindungselement mit den Merkmalen des Anspruchs 1, ein System mit den Merkmalen des Anspruchs 8 sowie ein Verfahren mit den Merkmalen des Anspruchs 13. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verbindungselement beschrieben sind, selbstverständlich auch im Zusammenhang mit dem erfindungsgemäßen System sowie dem erfindungsgemäßen Verfahren, und jeweils umgekehrt, so dass bezüglich der Offenbarung zu den einzelnen Erfindungsaspekten stets wechselseitig Bezug genommen wird bzw. werden kann.

Gegenstand der Erfindung ist insbesondere ein Verbindungselement zur Verbindung von räumlich dezentral angeordneten, elektrischen Komponenten einer Maschine, insbesondere einer Anlage, aufweisend:
- wenigstens eine Übertragungsleitung zur Übertragung von Energie und/oder Daten und/oder Signalen zwischen den elektrischen Komponenten, um durch die Übertragung einen Betrieb der Maschine zu ermöglichen,
wobei eine Sensorik in das Verbindungselement integriert ist, um eine sensorgestützte Überwachung des Verbindungselements und/oder der Maschine bereitzustellen.

Die Maschine kann als wenigstens eine der nachfolgend genannten Maschinen ausgebildet sein:
- Eine Automatisierungsanlage,
- Eine Produktionsanlage,
- Eine Logistikanlage,
- Eine Produktionsstraße,
- Ein Bearbeitungszentrum,
- Ein Industrieroboter,
- Eine Fertigungsanlage,
- Ein Aggregat,
- Ein Elektrogerät.

Insbesondere kann die Maschine dabei als eine Maschine mit modularem Charakter oder auch als mobile oder bewegliche Maschine ausgebildet sein, bei welcher einzelne Teile der Maschine modular gemäß einer Installationsvorgabe installiert werden. Diese Installation erfolgt zumindest teilweise manuell durch einen Benutzer wie einem Werker.

Die elektrischen Komponenten können Verbindungsmodule sein, welche eine dezentrale und modulare Verbindung von Installationselementen ermöglichen. Dezentral kann sich dabei darauf beziehen, dass die Verbindungsmodule zumindest teilweise einen zentralen Schaltschrank ersetzen, indem die Verbindungsmodule zwar jeweils nur einen Teil der Verbindungen für die Maschine bereitstellen, diese Verbindungen aber dezentral im Feld ermöglichen. Bei einer zentralen Topologie, also bspw. einem zentralisierten Schaltschrankkonzept, wird insbesondere von einer Punkt-zu-Punkt-Verbindung gesprochen, d.h. der Startpunkt, die Verbindung und der Endpunkt sind klar definiert. Im Gegensatz dazu ist es bei dezentralen Anwendungen möglich, bzw. kann sogar oftmals notwendig sein, zwischen dem Startpunkt und dem Endpunkt mehrere Komponenten anzuordnen oder zu verbinden. In diesem Fall kann z. B. von einer Modul-Modul oder Modul-Hub-Punkt-Verbindung gesprochen werden. Grundsätzlich können bei einer Maschine bspw. Die folgenden Komponenten vorgesehen sein: Geräte wie Aktoren und/oder Sensoren und/oder die Verbindungsmodule.

Ein Verbindungselement ist beispielsweise als ein Kabel mit Schnittstellen wie beispielsweise Steckverbindern ausgebildet, wobei die Schnittstellen eine Verbindung zu den räumlich dezentral angeordneten, elektrischen Komponenten ermöglichen.

Eine Übertragungsleitung kann verschiedene Funktionen zugleich erfüllen und dafür entsprechende Adern aufweisen. Besagte verschiedene Funktionen umfassen dabei insbesondere die Übertragung von Energie und/oder von Daten und/oder von Signalen zwischen den elektrischen Komponenten.

Der Begriff Sensorik bezeichnet im Rahmen der vorliegenden Erfindung vorzugsweise eine Anwendung von Sensoren zur Messung von Veränderungen von technischen Systemen, d.h. insbesondere der Maschine, der elektrischen Komponenten und/oder des Verbindungselements. Die dabei bereitgestellte sensorgestützte Überwachung kann kontinuierlich oder in bestimmten Zeitabständen und/oder in bestimmten Zeitintervallen vorgesehen sein. Der Umstand, dass die Sensorik in das Verbindungselement integriert ist, kann den Vorteil mit sich bringen, dass auf zusätzliche, externe Messvorrichtungen verzichtet werden kann. Dadurch reduziert sich vorteilhaft die Komplexität der Installation, während trotzdem eine Überwachung der Maschine und/oder der elektrischen Komponenten und/oder des Verbindungselements gegeben ist. Ferner ermöglicht dies, dass eine Anzahl von bereits zusätzlich installierten Überwachungssensoren vorteilhafterweise bezüglich der Menge optimiert werden kann. Damit wird sowohl die Komplexität der Installation deutlich verringert als auch die Gesamtkosten für die Installation einer Maschine gesenkt. Ferner hat dies den Vorteil, dass die Umwelt vorteilhafterweise geschont werden kann, da weniger Komponenten produziert und versandt werden müssen.

Nach einer weiteren Möglichkeit kann vorgesehen sein, dass die in das Verbindungselement integrierte Sensorik derart ausgebildet ist, dass die Übertragungsleitung als eine Lichtleiterübertragungsleitung ausgebildet ist, um die sensorgestützte Überwachung des Verbindungselements und/oder der Maschine mittels der Lichtleiterübertragungsleitung bereitzustellen. In anderen Worten kann gemäß einer Ausführungsform die Übertragungsleitung vorteilhafterweise zugleich als Sensorik zur Durchführung der sensorgestützten Überwachung fungieren. Dadurch kann die Komplexität des strukturellen Aufbaus des Verbindungselements vorteilhafterweise deutlich geringer sein. Es ist dabei denkbar, dass bestimmte Fasern der Lichtleiterübertragungsleitung für die sensorgestützte Überwachung vorgesehen sind.

Eine Lichtleiterübertragungsleitung kann als Lichtwellenleiter (LWL), oder Lichtleitkabel (LLK) ausgebildet sein. Lichtwellenleiter (LWL), oder Lichtleitkabel (LLK) sind insbesondere aus Lichtleitern bestehende und teilweise mit Steckverbindern konfektionierte Kabel und Leitungen zur Übertragung von Licht. Das Licht kann dabei in Fasern aus Quarzglas oder Kunststoff (polymere optische Faser) geführt werden.

Es kann vorgesehen sein, dass mehrere Lichtwellenleiter gebündelt werden, die zudem zum Schutz und zur Stabilisierung der einzelnen Fasern noch mechanisch verstärkt sein können.

Physikalisch gesehen sind Lichtwellenleiter insbesondere dielektrische Wellenleiter und aus konzentrischen Schichten aufgebaut; im Zentrum liegt der lichtführende Kern, der umgeben ist von einem Mantel mit einem etwas niedrigeren Brechungsindex sowie von weiteren Schutzschichten aus Kunststoff. Je nach Anwendungsfall kann der Kern einen Durchmesser von einigen Mikrometern bis zu über einem Millimeter haben. Ferner können Lichtwellenleiter insbesondere nach dem Verlauf des Brechungsindexes zwischen Kern und Mantel (Stufenindex- oder Gradientenindexfasern) und der Anzahl von ausbreitungsfähigen Schwingungsmoden unterschieden werden, welche durch den Kerndurchmesser limitiert wird.

Multimodefasern, in denen sich mehrere tausend Moden ausbreiten können, haben insbesondere ein stark strukturiertes Strahlprofil. In Monomodefasern, die einen sehr kleinen Kerndurchmesser haben, kann sich nur die sogenannte Grundmode ausbreiten, deren Intensität in radialer Richtung näherungsweise normalverteilt ist. Die Anzahl der auftretenden Moden kann die Signalübertragung beeinflussen, da jede Mode einen unterschiedlich langen Lichtweg nimmt. Deshalb können Multimodefasern mit zunehmender Länge eine stärkere Signalverfälschung zeigen (Modendispersion) als Monomodefasern, die somit zur Signalübertragung über weite Strecken besser geeignet sind.

Lichtwellenleiter können in verschiedenen Bereichen Anwendung finden wie zum Beispiel in der Nachrichtentechnik als Übertragungsmedium für leitungsgebundene Kommunikationssysteme bei Glasfasernetzen, zur Übertragung von Energie als Lichtleitkabel für den flexiblen Transport von Laserstrahlung zur Materialbearbeitung oder in der Medizin, für Beleuchtungs- und Abbildungszwecke unter anderem in Mikroskopbeleuchtungen, Lichtleitkabeln und Bildleitern in Endoskopen. Ferner finden sie Anwendung zur Geräte- und Gebäudebeleuchtung oder in der Messtechnik als Bestandteil faseroptischer Sensoren, an Spektrometern oder anderen optischen Messgeräten. Ein Vorteil von Lichtwellenleitern oder Lichtleiterkabeln liegt beispielsweise in einer höheren Reichweite und einer höheren möglichen Übertragungsrate.

Ferner kann es im Rahmen der Erfindung vorgesehen sein, dass ein Sensorelement vorgesehen ist, um die Sensorik integriert in das Verbindungselement bereitzustellen. Damit ist insbesondere eine weitere Ausführungsform beschrieben, in welcher das Sensorelement als ein von der Übertragungsleitung separates Element vorliegt. Das kann vorteilhaft sein, um eine Beeinträchtigung oder Beeinflussung der Übertragung der Energie und/oder Daten und/oder Signalen durch die Übertragungsleitung zu vermeiden.

Ein weiterer Vorteil im Rahmen der Erfindung ist erzielbar, wenn das Sensorelement als ein Lichtleiterelement ausgebildet ist und als zusätzliche Leitung neben der Übertragungsleitung angeordnet ist. Das Lichtleiterelement kann als Lichtwellenleiter (LWL), oder Lichtleitkabel (LLK) ausgebildet sein und entsprechend gilt die voranstehende Beschreibung zu der Lichtleiterübertragungsleitung analog auch für das Lichtleiterelement.

Ein weiterer Vorteil kann im Rahmen der Erfindung erzielt werden, wenn das Lichtleiterelement ausgebildet ist, um zusätzlich eine Übertragung von Energie und/oder Daten und/oder Signalen zwischen den elektrischen Komponenten bereitzustellen. Damit ist in anderen Worten beschrieben, dass das Lichtleiterelement gleichzeitig zwei Funktionen erfüllen kann: die sensorgestützte Überwachung sowie zusätzlich die Übertragung von Energie und/oder Daten und/oder Signalen zwischen den elektrischen Komponenten. Dadurch wird vorteilhafterweise neben der Überwachung eine weitere Übertragungsleitung bereitgestellt, wodurch die Variabilität und Flexibilität des Verbindungselements erhöht werden kann. Ferner hat dies den Vorteil, dass eine deutliche Reduzierung des Materialeinsatzes von Verbindungselementen wie beispielsweise von Kabeln gewährleistet werden kann.

Nach einer weiteren Möglichkeit kann vorgesehen sein, dass die in das Verbindungselement integrierte Sensorik wenigstens eine Messstelle in dem Verbindungselement aufweist. Eine Messstelle kann vorteilhaft an einer kritischen Position des Verbindungselements vorgesehen sein, beispielsweise eine Position, welche regelmäßig mechanischen Belastungen ausgesetzt ist. Es ist auch denkbar, dass wenigstens zwei oder mehr Messstellen in dem Verbindungselement vorgesehen sind. Dies hat den Vorteil, dass die eine oder mehrere Messstellen variabel angeordnet werden kann, um an einer oder mehrerer kritischen Stellen der Maschine eine sensorgestützte Überwachung bereitstellen zu können. In einer möglichen Ausführungsform ist eine kontinuierliche Messung entlang des Verbindungselements vorgesehen.

Beispielsweise kann es vorgesehen sein, dass die in das Verbindungselement integrierte Sensorik ausgebildet ist, um eine Messung von Vibration, Geräuschen, Temperatur und/oder Druck innerhalb des Verbindungselements bereitzustellen.

Für die Messung von Vibration, Geräuschen, Temperatur und/oder Druck können verschiedene Typen von Sensoren verwendet werden. Im Falle der Verwendung eines Lichtwellenleiters (LWL) werden Vibrationen, Geräusche, Temperatur und/oder Druck vorteilhafterweise gemessen, indem der Lichtwellenleiter als Sensor fungiert, der die Vibrationen, Geräusche, Temperatur und/oder Druck in Form von Veränderungen in der Lichtintensität erfasst. Dabei kann ein Stück des Lichtwellenleiters mit einem Reflexionsgitter versehen und an beiden Enden fixiert werden. Ein Laserstrahl kann nun durch den LWL gesendet werden und trifft auf das Reflexionsgitter, das einen Teil des Lichts zurück in den LWL reflektiert. Wenn beispielsweise Vibrationen oder Geräusche auf den LWL einwirken, bewirkt die, dass sich die Länge des LWLs leicht verändert, was zu einer Änderung des Abstands zwischen den Reflexionsgittern führen kann. Dies wiederum führt insbesondere zu einer Phasenverschiebung des reflektierten Lichts, die durch einen optischen Empfänger erfasst werden kann. Die festgestellte Änderung ermöglicht es, eine Auswertung anhand der festgestellten Änderungen durchzuführen, um entscheiden zu können, ob beispielsweise eine Abweichung von der Norm oder eine kritische Situation an einer überwachten Stelle der Maschine und/oder eines Verbindungselements eingetreten sein könnte.

Ebenfalls Gegenstand der Erfindung ist ein System umfassend eine Maschine, insbesondere eine Anlage, und räumlich dezentral angeordnete, elektrische Komponenten, wobei die elektrischen Komponenten durch wenigstens ein Verbindungselement nach einem der vorhergehenden Ansprüche miteinander verbunden sind. Das System kann ferner eine Datenverarbeitungsvorrichtung aufweisen, um die sensorgestützte Überwachung des Verbindungselements und/oder der Maschine mit der Datenverarbeitungsvorrichtung auszuwerten. Damit bringt das erfindungsgemäße System die gleichen Vorteile mit sich, wie sie ausführlich mit Bezug auf das erfindungsgemäße Verbindungselement beschrieben wurden. Die Datenverarbeitungsvorrichtung ist beispielsweise als Computer oder als Mikroprozessor ausgebildet und kann in oder an der Maschine sowie an einer externen Position angeordnet sein, wobei ferner eine drahtgebundene oder eine drahtlose Kommunikation der Maschine und/oder der elektrischen Komponenten mit der Datenverarbeitungsvorrichtung vorgesehen sein kann, insbesondere auch über ein erfindungsgemäßes Verbindungselement. Es ist denkbar, dass mehrere Datenverarbeitungsvorrichtungen vorgesehen sein können.

Es kann weiter möglich sein, dass die Datenverarbeitungsvorrichtung dazu ausgebildet ist, anhand der Auswertung der sensorgestützten Überwachung eine Anomalie-Detektion und insbesondere eine Anomalie-Lokalisation, der Maschine und/oder des Verbindungselements durchzuführen. Eine Anomalie ist beispielsweise ein Bruch oder eine Ermüdung oder sonstige Beschädigung oder Beeinflussung des Verbindungselements oder der Maschine. Durch die entsprechende Lokalisation der Anomalie kann vorteilhafterweise im Anschluss an die Detektion gezielt eine Reparatur eingeleitet werden.

Gemäß einer vorteilhaften Weiterbildung der Erfindung kann vorgesehen sein, dass die Datenverarbeitungsvorrichtung dazu ausgebildet ist, anhand der Auswertung der sensorgestützten Überwachung eine Lebensdauer des Verbindungselements und/oder der räumlich dezentral angeordneten, elektrischen Komponenten zu berechnen, wobei die Datenverarbeitungsvorrichtung vorzugsweise ferner dazu ausgebildet ist mit Berücksichtigung der berechneten Lebensdauer eine prädiktive Instandhaltung und/oder eine handlungsempfehlende Wartung bereitzustellen. Eine prädiktive Instandhaltung kann im Rahmen der vorliegenden Erfindung synonym zu dem Begriff "Predictive Maintenance" zu verstehen sein und ist insbesondere ein Ansatz, bei dem Daten von Maschinen oder Systemen gesammelt werden, um zukünftige Ausfälle oder Probleme vorherzusagen. Dabei werden beispielsweise historische Daten und Daten von Sensoren wie Vibrationen, Temperaturen und Drücken verwendet, um Anomalien zu erkennen und einen bevorstehenden Ausfall vorauszusagen. Eine handlungsempfehlende Wartung kann im Rahmen der vorliegenden Erfindung synonym zu dem Begriff "Prescriptive Maintenance" zu verstehen sein und geht insbesondere einen Schritt weiter als Predictive Maintenance, indem es nicht nur einen bevorstehenden Ausfall vorhersagt, sondern auch präskriptive Maßnahmen empfiehlt, um den Ausfall zu verhindern oder die Auswirkungen des Ausfalls zu minimieren. Diese Empfehlungen können beispielsweise vorschlagen, welche Maßnahmen ergriffen werden sollten, um den Zustand einer Komponente zu verbessern oder eine Ersatzkomponente zu installieren, bevor ein Ausfall eintritt. Ferner kann bei einer "Prescriptive Maintenance" auch berechnet werden, ob es bei einem detektierten Zustand durch die Sensorik aufgrund eines erzielbaren Marktpreises eines Produktes wie z.B. einer Komponente oder eines Verbindungselements einer Maschine sinnvoll ist, mit voller Maschinenlast weiterzufahren, oder aber die Maschinenlast zu reduzieren und damit die Lebensdauer zu erhöhen. Dadurch wird ebenso ermöglicht die Produktionssteuerung in Abhängigkeit des überwachten Zustands von Komponenten zu optimieren.

Optional kann es vorgesehen sein, dass die Datenverarbeitungsvorrichtung dazu ausgebildet ist, anhand der sensorgestützten Überwachung des Verbindungselements und/oder der Maschine eine Topologie des wenigstens einen Verbindungselements und/oder der räumlich dezentral angeordneten, elektrischen Komponenten zu ermitteln. Unter einer Topologie kann im Rahmen der vorliegenden Erfindung eine räumliche und/oder strukturelle Anordnung verstanden werden. Eine Kenntnis der Topologie ermöglicht vorteilhaft beispielsweise eine passgenaue Bereitstellung von Ersatzteilen oder eine Anpassung der Programmierung der Maschine auf Basis einer veränderten Topologie.

In einer weiteren Möglichkeit kann vorgesehen sein, dass die Datenverarbeitungsvorrichtung dazu ausgebildet ist, anhand der sensorgestützten Überwachung des Verbindungselements und/oder der Maschine eine Bewegung und/oder eine Verformung des Verbindungselements zu detektieren und/oder zu lokalisieren und vorzugsweise zu klassifizieren.

Mit einer Bewegung kann eine Translation und/oder Rotation des Verbindungselements bezeichnet sein. Eine Translation ist insbesondere eine Bewegung, bei der alle Punkte eines physikalischen Systems, z. B. eines starren Körpers, dieselbe Verschiebung erfahren. Eine Rotation ist insbesondere eine Bewegung eines Körpers um eine Rotationsachse. Eine Verformung beschreibt beispielsweise eine Dehnung oder eine Biegung des Verbindungselements um einen Biegeradius. Durch die Detektion und Lokalisation der Bewegung und/oder der Verformung kann in anderen Worten vorteilhafterweise genau festgestellt werden an welcher Stelle des Verbindungselements und in welcher Art und Weise eine Bewegung und/oder Verformung stattfindet. Eine Klassifikation kann dabei beispielsweise eine Bewegungsstrecke oder den Biegeradius umfassen, wodurch die Überwachung vorteilhaft mit verschiedenen Beschreibungsparametern ergänzt wird.

Ebenfalls Gegenstand der Erfindung ist ein Verfahren für eine Bereitstellung einer Sensorik für ein erfindungsgemäßes System, welches die folgenden Schritte umfasst:
- Bereitstellen der Übertragung von Energie und/oder Daten und/oder Signalen über das Verbindungselement zwischen den räumlich dezentral angeordneten, elektrischen Komponenten der Maschine,
- Bereitstellen der sensorgestützten Überwachung der Maschine.

Damit bringt das erfindungsgemäße Verfahren die gleichen Vorteile mit sich, wie sie ausführlich mit Bezug auf das erfindungsgemäße Verbindungselement sowie mit Bezug auf das erfindungsgemäße System beschrieben wurden.

Vorteilhaft ist es darüber hinaus, wenn im Rahmen der Erfindung das Verfahren ferner den folgenden Schritt umfasst:
- Auswerten der sensorgestützten Überwachung der Maschine durch die Datenverarbeitungsvorrichtung.

Mit dem Begriff Auswerten sei im Rahmen der vorliegenden Erfindung beispielsweise ein vorteilhaftes Interpretieren von Messdaten bezeichnet, welche durch die Sensorik bereitgestellt werden. Auch ist denkbar, dass die Messdaten und/oder eine mögliche Interpretation der Messdaten durch die Datenverarbeitungsvorrichtung an einer Anzeige ausgegeben werden. Dadurch wird beispielsweise vorteilhaft ein Benutzer der Maschine über den aktuellen Zustand der Maschine und/oder der elektrischen Komponenten und/oder des Verbindungselements informiert. Ferner kann im Rahmen der vorliegenden Erfindung vorgesehen sein, dass basierend auf der Auswertung durch die Datenverarbeitungsvorrichtung eine Warnmeldung ausgegeben wird, wodurch vorteilhafterweise ein Benutzer frühzeitig beispielsweise über eine Anomalie oder aktuelle oder möglicherweise in naher Zukunft eintretende Fehlfunktion informiert wird.

Zudem ist im Rahmen der Erfindung denkbar, dass das Verfahren ferner wenigstens einen der folgenden Schritte umfasst:
- Durchführen einer Anomalie-Detektion der Maschine und/oder des Verbindungselements und vorzugsweise alarmieren bei Feststellen einer Anomalie,
- Berechnen einer Lebensdauer des Verbindungselements und/oder der räumlich dezentral angeordneten, elektrischen Komponente, wobei vorzugsweise ferner mit Berücksichtigung der berechneten Lebensdauer eine prädiktive Instandhaltung und/oder eine handlungsempfehlende Wartung bereitgestellt wird,
- Ermitteln einer Topologie des Verbindungselements und/oder der räumlich dezentral angeordneten, elektrischen Komponenten,
- Detektieren einer Bewegung und/oder Verformung des Verbindungselements,
- Detektieren und Lokalisieren von Leckagen in einem Druckbehälter der Maschine.

Das Detektieren und Lokalisieren der Leckagen kann durch Analyse wenigstens eines Messparameters der Sensorik erfolgen, beispielsweise einer veränderten Vibration, veränderter Geräusche, einer veränderten Temperatur und/oder eines veränderten Druckes. Der Begriff verändert bezeichnet dabei jeweils eine Abweichung von einem vorher festgelegten Normbereich.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung einer möglichen Ausführungsform des erfindungsgemäßen Verfahrens,
- Fig. 2: eine schematische Darstellung einer möglichen Ausführungsform des erfindungsgemäßen Systems,
- Fig. 3a: eine schematische Darstellung einer möglichen Ausführungsform des erfindungsgemäßen Verfahrens,
- Fig. 3b: eine schematische Darstellung einer möglichen Ausführungsform des erfindungsgemäßen Verfahrens,
- Fig. 3c: eine schematische Darstellung einer möglichen Ausführungsform des erfindungsgemäßen Verfahrens.

In den nachfolgenden Figuren werden für die gleichen technischen Merkmale auch von unterschiedlichen Ausführungsbeispielen die identischen Bezugszeichen verwendet.

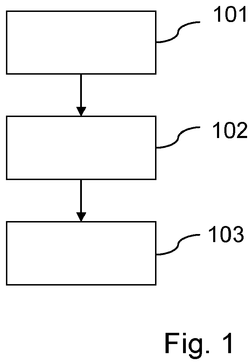

Fig. 1 zeigt schematisch eine mögliche Ausführungsform des erfindungsgemäßen Verfahrens 100 für eine Bereitstellung einer Sensorik 12 für ein erfindungsgemäßes System 1. Dabei wird in einem ersten Verfahrensschritt 101 eine Übertragung von Energie und/oder Daten und/oder Signalen über ein Verbindungselement 10 zwischen den räumlich dezentral angeordneten, elektrischen Komponenten 20 der Maschine 30 bereitgestellt. In einem zweiten Verfahrensschritt 102 wird die sensorgestützte Überwachung der Maschine 30 bereitgestellt, beziehungsweise durchgeführt. In einem optionalen dritten Verfahrensschritt 103, welcher in dieser Ausführungsform vorgesehen ist, wird ferner die sensorgestützte Überwachung der Maschine 30 durch eine Datenverarbeitungsvorrichtung 40 ausgewertet.

Das Verfahren 100 kann je nach gewünschter Funktionalität um verschiedene Verfahrensschritte ergänzt werden.

Einige Beispiele für zusätzliche Verfahrensschritte sind folgende:
- Durchführen einer Anomalie-Detektion der Maschine 30 und/oder des Verbindungselements 10 und vorzugsweise alarmieren bei Feststellen einer Anomalie,
- Berechnen einer Lebensdauer des Verbindungselements 10 und/oder der räumlich dezentral angeordneten, elektrischen Komponente 20, wobei vorzugsweise ferner mit Berücksichtigung der berechneten Lebensdauer eine prädiktive Instandhaltung und/oder eine handlungsempfehlende Wartung bereitgestellt wird,
- Ermitteln einer Topologie des Verbindungselements 10 und/oder der räumlich dezentral angeordneten, elektrischen Komponenten 20,
- Detektieren einer Bewegung und/oder Verformung des Verbindungselements 10,
- Detektieren und Lokalisieren von Leckagen in einem Druckbehälter der Maschine 30.

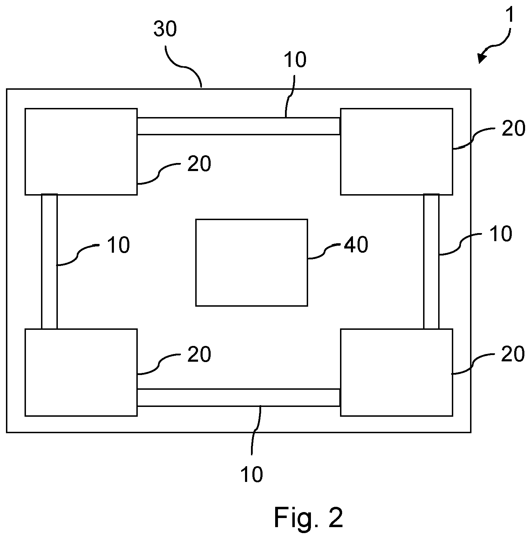

Fig. 2 zeigt eine schematische Darstellung einer möglichen Ausführungsform des erfindungsgemäßen Systems 1. Das System 1 umfasst eine Maschine 30 und verschiedene räumlich dezentrale, elektrische Komponenten 20. Ferner sind die elektrischen Komponenten 20 jeweils über Verbindungselemente 10 miteinander verbunden. Zusätzlich ist in dieser Ausführungsform des Systems 1 eine Datenverarbeitungsvorrichtung 40 vorgesehen. Eine Verbindung zwischen den elektrischen Komponenten 20 und/oder der Verbindungselemente 10 mit der Datenverarbeitungsvorrichtung 40 kann drahtlos oder drahtgebunden (nicht dargestellt) ausgebildet sein. Es ist auch denkbar, dass wenigstens eine elektrische Komponente 20 über ein erfindungsgemäßes Verbindungselement 10 mit der Datenverarbeitungsvorrichtung 40 verbunden ist.

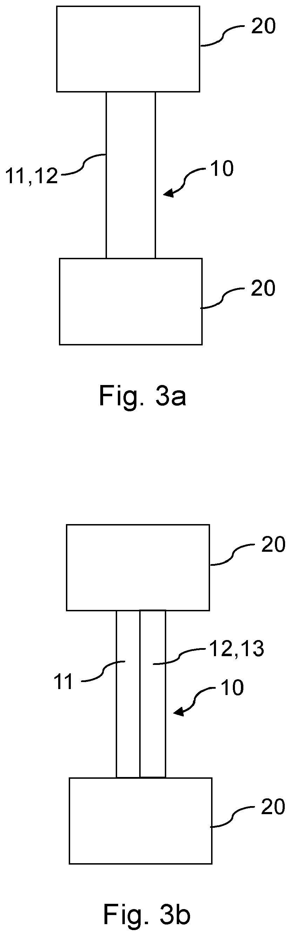

In den Figuren 3a bis 3c sind drei verschiedene mögliche Ausführungsformen des Verbindungselements 10 dargestellt.

In der Ausführungsform gemäß Fig. 3a ist ein Verbindungselement 10 zwischen zwei elektrischen Komponenten 20 dargestellt. In dieser Ausführungsform ist eine Übertragungsleitung 11 vorgesehen, welche zugleich als Sensorik 12 fungiert. Dies ist beispielsweise dadurch bereitgestellt, dass die Übertragungsleitung 11 als Lichtleiterübertragungsleitung ausgebildet ist.

In der Ausführungsform gemäß Fig. 3b ist, abweichend von der Ausführungsform gemäß Fig. 3a, zusätzlich zu der Übertragungsleitung 11 ein Sensorelement 13 vorgesehen, um die Sensorik 12 bereitzustellen. Das Sensorelement 13 ist hierbei beispielsweise als ein Lichtleiterelement ausgebildet und als zusätzliche Leitung neben der Übertragungsleitung 11 angeordnet. Es kann vorgesehen sein, dass das als Lichtleiterelement ausgebildete Sensorelement 13 eine Übertragung von Energie und/oder Daten und/oder Signalen zwischen den elektrischen Komponenten 20 bereitstellt, wodurch das Lichtleiterelement als zusätzliche Übertragungsleitung 11 fungieren würde.

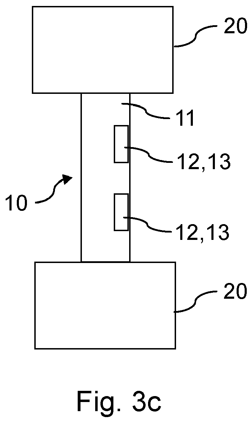

In der Ausführungsform gemäß Fig. 3c liegen im Gegensatz zu den Ausführungsformen der Figuren 3a und 3b mehrere Sensorelemente 13 vor, welche gemeinsam die Sensorik 12 bereitstellen. Die Sensorelemente 13 sind dabei in das Verbindungselement 10 integriert und neben der Übertragungsleitung 11 angeordnet. Gemäß dieser Ausführungsform kann jeweils an gewünschten Messstellen ein Sensorelement 13 angeordnet sein, um an diesen Messstellen die sensorgestützte Überwachung durchzuführen.

Gemäß der Ausführungsformen der Fig. 3a und 3b kann im Falle der Verwendung eines Lichtwellenleiters als Sensorik 12 eine kontinuierliche Messung entlang des Verbindungselements 10 bereitgestellt sein.

Die in das Verbindungselement 10 integrierte Sensorik 12 kann in jeder der beschriebenen Ausführungsformen eine Messung von Vibration, Geräuschen, Temperatur und/oder Druck innerhalb des Verbindungselements 10 bereitstellen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: System

- 10: Verbindungselement
- 11: Übertragungsleitung
- 12: Sensorik
- 13: Sensorelement

- 20: Komponenten

- 30: Maschine

- 40: Datenverarbeitungsvorrichtung

- 100: Verfahren
- 101: erster Verfahrensschritt
- 102: zweiter Verfahrensschritt
- 103: dritter Verfahrensschritt

## Patentansprüche

1. Verbindungselement (10) zur Verbindung von räumlich dezentral angeordneten, elektrischen Komponenten (20) einer Maschine (30), insbesondere einer Anlage, aufweisend:
- wenigstens eine Übertragungsleitung (11) zur Übertragung von Energie und/oder Daten und/oder Signalen zwischen den elektrischen Komponenten (20), um durch die Übertragung einen Betrieb der Maschine (30) zu ermöglichen,
**dadurch gekennzeichnet,**
**dass** eine Sensorik (12) in das Verbindungselement (10) integriert ist, um eine sensorgestützte Überwachung des Verbindungselements (10) und/oder der Maschine (30) bereitzustellen.

2. Verbindungselement (10) nach Anspruch 1,
**dadurch gekennzeichnet,**
**dass** die in das Verbindungselement (10) integrierte Sensorik (12) derart ausgebildet ist, dass die Übertragungsleitung (11) als eine Lichtleiterübertragungsleitung ausgebildet ist, um die sensorgestützte Überwachung des Verbindungselements (10) und/oder der Maschine (30) mittels der Lichtleiterübertragungsleitung bereitzustellen.

3. Verbindungselement (10) nach Anspruch 1,
**dadurch gekennzeichnet,**
**dass** ein Sensorelement (13) vorgesehen ist, um die Sensorik (12) integriert in das Verbindungselement (10) bereitzustellen.

4. Verbindungselement (10) nach Anspruch 3,
**dadurch gekennzeichnet,**
**dass** das Sensorelement (13) als ein Lichtleiterelement ausgebildet ist und als zusätzliche Leitung neben der Übertragungsleitung (11) angeordnet ist.

5. Verbindungselement (10) nach Anspruch 4,
**dadurch gekennzeichnet,**
**dass** das Lichtleiterelement ausgebildet ist, um zusätzlich eine Übertragung von Energie und/oder Daten und/oder Signalen zwischen den elektrischen Komponenten (20) bereitzustellen.

6. Verbindungselement (10) nach einem der vorhergehenden Ansprüche,
**dadurch gekennzeichnet,**
**dass** die in das Verbindungselement (10) integrierte Sensorik (12) wenigstens eine Messstelle in dem Verbindungselement (10) aufweist.

7. Verbindungselement (10) nach einem der vorhergehenden Ansprüche,
**dadurch gekennzeichnet,**
**dass** die in das Verbindungselement (10) integrierte Sensorik (12) ausgebildet ist, um eine Messung von Vibration, Geräuschen, Temperatur und/oder Druck innerhalb des Verbindungselements (10) bereitzustellen.

8. System (1) umfassend eine Maschine (30), insbesondere eine Anlage, und räumlich dezentral angeordnete, elektrische Komponenten (20), wobei die elektrischen Komponenten (20) durch wenigstens ein Verbindungselement (10) nach einem der vorhergehenden Ansprüche miteinander verbunden sind,
wobei das System (1) ferner eine Datenverarbeitungsvorrichtung (40) aufweist, um die sensorgestützte Überwachung des Verbindungselements (10) und/oder der Maschine (30) mit der Datenverarbeitungsvorrichtung (40) auszuwerten.

9. System (1) nach Anspruch 8,
**dadurch gekennzeichnet,**
**dass** die Datenverarbeitungsvorrichtung (40) dazu ausgebildet ist, anhand der Auswertung der sensorgestützten Überwachung eine Anomalie-Detektion und insbesondere eine Anomalie-Lokalisation, der Maschine (30) und/oder des Verbindungselements (10) durchzuführen.

10. System (1) nach Anspruch 8 oder 9,
**dadurch gekennzeichnet,**
**dass** die Datenverarbeitungsvorrichtung (40) dazu ausgebildet ist, anhand der Auswertung der sensorgestützten Überwachung eine Lebensdauer des Verbindungselements (10) und/oder der räumlich dezentral angeordneten, elektrischen Komponenten (20) zu berechnen,
wobei die Datenverarbeitungsvorrichtung (40) vorzugsweise ferner dazu ausgebildet ist mit Berücksichtigung der berechneten Lebensdauer eine prädiktive Instandhaltung und/oder eine handlungsempfehlende Wartung bereitzustellen.

11. System (1) nach einem der Ansprüche 8 bis 10,
**dadurch gekennzeichnet,**
**dass** die Datenverarbeitungsvorrichtung (40) dazu ausgebildet ist, anhand der sensorgestützten Überwachung des Verbindungselements (10) und/oder der Maschine (30) eine Topologie des wenigstens einen Verbindungselements (10) und/oder der räumlich dezentral angeordneten, elektrischen Komponenten (20) zu ermitteln.

12. System (1) nach einem der Ansprüche 8 bis 11,
**dadurch gekennzeichnet,**
**dass** die Datenverarbeitungsvorrichtung (40) dazu ausgebildet ist, anhand der sensorgestützten Überwachung des Verbindungselements (10) und/oder der Maschine (30) eine Bewegung und/oder eine Verformung des Verbindungselements (10) zu detektieren und/oder zu lokalisieren und vorzugsweise zu klassifizieren.

13. Verfahren (100) für eine Bereitstellung einer Sensorik (12) für ein System (1) nach einem der Ansprüche 8 bis 12, wobei das Verfahren (100) die folgenden Schritte umfasst:
- Bereitstellen (101) der Übertragung von Energie und/oder Daten und/oder Signalen über das Verbindungselement (10) zwischen den räumlich dezentral angeordneten, elektrischen Komponenten (20) der Maschine (30),
- Bereitstellen (102) der sensorgestützten Überwachung der Maschine (30).

14. Verfahren (100) nach Anspruch 13,
**dadurch gekennzeichnet,**
**dass** das Verfahren (100) ferner den folgenden Schritt umfasst:
- Auswerten (103) der sensorgestützten Überwachung der Maschine (30) durch die Datenverarbeitungsvorrichtung (40).

15. Verfahren (100) nach Anspruch 14,
**dadurch gekennzeichnet,**
**dass** das Verfahren (100) ferner wenigstens einen der folgenden Schritte umfasst:
- Durchführen einer Anomalie-Detektion der Maschine (30) und/oder des Verbindungselements (10) und vorzugsweise alarmieren bei Feststellen einer Anomalie,
- Berechnen einer Lebensdauer des Verbindungselements (10) und/oder der räumlich dezentral angeordneten, elektrischen Komponente (20), wobei vorzugsweise ferner mit Berücksichtigung der berechneten Lebensdauer eine prädiktive Instandhaltung und/oder eine handlungsempfehlende Wartung bereitgestellt wird,
- Ermitteln einer Topologie des Verbindungselements (10) und/oder der räumlich dezentral angeordneten, elektrischen Komponenten (20),
- Detektieren einer Bewegung und/oder Verformung des Verbindungselements (10),
- Detektieren und Lokalisieren von Leckagen in einem Druckbehälter der Maschine (30).

## Geänderte Patentansprüche

### Geänderte Patentansprüche gemäss Regel 137(2) EPÜ.

1. Verbindungselement (10) zur Verbindung von räumlich dezentral angeordneten, elektrischen Komponenten (20) einer Maschine (30),
wobei eine räumlich dezentral angeordnete, elektrische Komponente (20) als wenigstens ein Verbindungsmodul ausgebildet ist, welches eine dezentrale und modulare Verbindung von Installationselementen ermöglicht, wobei dezentral spezifiziert, dass ein Verbindungsmodul zumindest teilweise einen zentralen Schaltschrank ersetzt, indem die Verbindungsmodule jeweils einen Teil der Verbindungen für die Maschine bereitstellen, diese Verbindungen aber dezentral im Feld ermöglichen,
aufweisend:
- wenigstens eine Übertragungsleitung (11) zur Übertragung von Energie und/oder Daten und/oder Signalen zwischen den elektrischen Komponenten (20), um durch die Übertragung einen Betrieb der Maschine (30) zu ermöglichen,
wobei eine Sensorik (12) in das Verbindungselement (10) integriert ist, um eine sensorgestützte Überwachung des Verbindungselements (10) und/oder der Maschine (30) bereitzustellen,
**dadurch gekennzeichnet,**
**dass** die in das Verbindungselement (10) integrierte Sensorik (12) derart ausgebildet ist, dass die Übertragungsleitung (11) als eine Lichtleiterübertragungsleitung ausgebildet ist, um die sensorgestützte Überwachung des Verbindungselements (10) und/oder der Maschine (30) mittels der Lichtleiterübertragungsleitung bereitzustellen.

2. Verbindungselement (10) nach Anspruch 1,
**dadurch gekennzeichnet,**
**dass** ein Sensorelement (13) vorgesehen ist, um die Sensorik (12) integriert in das Verbindungselement (10) bereitzustellen.

3. Verbindungselement (10) nach Anspruch 2,
**dadurch gekennzeichnet,**
**dass** das Sensorelement (13) als ein Lichtleiterelement ausgebildet ist und als zusätzliche Leitung neben der Übertragungsleitung (11) angeordnet ist.

4. Verbindungselement (10) nach Anspruch 3,
**dadurch gekennzeichnet,**
**dass** das Lichtleiterelement ausgebildet ist, um zusätzlich eine Übertragung von Energie und/oder Daten und/oder Signalen zwischen den elektrischen Komponenten (20) bereitzustellen.

5. Verbindungselement (10) nach einem der vorhergehenden Ansprüche,
**dadurch gekennzeichnet,**
**dass** die in das Verbindungselement (10) integrierte Sensorik (12) wenigstens eine Messstelle in dem Verbindungselement (10) aufweist.

6. Verbindungselement (10) nach einem der vorhergehenden Ansprüche,
**dadurch gekennzeichnet,**
**dass** die in das Verbindungselement (10) integrierte Sensorik (12) ausgebildet ist, um eine Messung von Vibration, Geräuschen, Temperatur und/oder Druck innerhalb des Verbindungselements (10) bereitzustellen.

7. System (1) umfassend eine Maschine (30), insbesondere eine Anlage, und räumlich dezentral angeordnete, elektrische Komponenten (20), wobei die elektrischen Komponenten (20) durch wenigstens ein Verbindungselement (10) nach einem der vorhergehenden Ansprüche miteinander verbunden sind,
wobei das System (1) ferner eine Datenverarbeitungsvorrichtung (40) aufweist, um die sensorgestützte Überwachung des Verbindungselements (10) und/oder der Maschine (30) mit der Datenverarbeitungsvorrichtung (40) auszuwerten.

8. System (1) nach Anspruch 7,
**dadurch gekennzeichnet,**
**dass** die Datenverarbeitungsvorrichtung (40) dazu ausgebildet ist, anhand der Auswertung der sensorgestützten Überwachung eine Anomalie-Detektion und insbesondere eine Anomalie-Lokalisation, der Maschine (30) und/oder des Verbindungselements (10) durchzuführen.

9. System (1) nach Anspruch 7 oder 8,
**dadurch gekennzeichnet,**
**dass** die Datenverarbeitungsvorrichtung (40) dazu ausgebildet ist, anhand der Auswertung der sensorgestützten Überwachung eine Lebensdauer des Verbindungselements (10) und/oder der räumlich dezentral angeordneten, elektrischen Komponenten (20) zu berechnen,
wobei die Datenverarbeitungsvorrichtung (40) vorzugsweise ferner dazu ausgebildet ist mit Berücksichtigung der berechneten Lebensdauer eine prädiktive Instandhaltung und/oder eine handlungsempfehlende Wartung bereitzustellen.

10. System (1) nach einem der Ansprüche 7 bis 9,
**dadurch gekennzeichnet,**
**dass** die Datenverarbeitungsvorrichtung (40) dazu ausgebildet ist, anhand der sensorgestützten Überwachung des Verbindungselements (10) und/oder der Maschine (30) eine Topologie des wenigstens einen Verbindungselements (10) und/oder der räumlich dezentral angeordneten, elektrischen Komponenten (20) zu ermitteln.

11. System (1) nach einem der Ansprüche 7 bis 10,
**dadurch gekennzeichnet,**
**dass** die Datenverarbeitungsvorrichtung (40) dazu ausgebildet ist, anhand der sensorgestützten Überwachung des Verbindungselements (10) und/oder der Maschine (30) eine Bewegung und/oder eine Verformung des Verbindungselements (10) zu detektieren und/oder zu lokalisieren und vorzugsweise zu klassifizieren.

12. Verfahren (100) für eine Bereitstellung einer Sensorik (12) für ein System (1) nach einem der Ansprüche 7 bis 11, wobei das Verfahren (100) die folgenden Schritte umfasst:
- Bereitstellen (101) der Übertragung von Energie und/oder Daten und/oder Signalen über das Verbindungselement (10) zwischen den räumlich dezentral angeordneten, elektrischen Komponenten (20) der Maschine (30),
- Bereitstellen (102) der sensorgestützten Überwachung der Maschine (30).

13. Verfahren (100) nach Anspruch 12,
**dadurch gekennzeichnet,**
**dass** das Verfahren (100) ferner den folgenden Schritt umfasst:
- Auswerten (103) der sensorgestützten Überwachung der Maschine (30) durch die Datenverarbeitungsvorrichtung (40).

14. Verfahren (100) nach Anspruch 13,
**dadurch gekennzeichnet,**
**dass** das Verfahren (100) ferner wenigstens einen der folgenden Schritte umfasst:
- Durchführen einer Anomalie-Detektion der Maschine (30) und/oder des Verbindungselements (10) und vorzugsweise alarmieren bei Feststellen einer Anomalie,
- Berechnen einer Lebensdauer des Verbindungselements (10) und/oder der räumlich dezentral angeordneten, elektrischen Komponente (20), wobei vorzugsweise ferner mit Berücksichtigung der berechneten Lebensdauer eine prädiktive Instandhaltung und/oder eine handlungsempfehlende Wartung bereitgestellt wird,
- Ermitteln einer Topologie des Verbindungselements (10) und/oder der räumlich dezentral angeordneten, elektrischen Komponenten (20),
- Detektieren einer Bewegung und/oder Verformung des Verbindungselements (10),
- Detektieren und Lokalisieren von Leckagen in einem Druckbehälter der Maschine (30).
